# EUROPEAN PATENT APPLICATION

(11) **EP 2 144 182 A1**
(43) Date of publication of application: **13.01.2010**
(21) Application number: 08171693.8
(22) Date of filing: 15.12.2008
(51) Int. Cl.: G06F 21/00

(54) **A data communication method between wireless devices and a system thereof**

(30) Priority: 08.07.2008 US 169200
(71) Applicant: SAMSUNG ELECTRONICS CO., LTD., Suwon-si, Gyeonggi-do (KR)
(72) Inventor: Park, Ji-yong Sinnamusil 5-danji Apt. 531-1205, Gyeonggi-do, Suwon-si (KR); Im, Sang-kyun, Seoul, Nowon-gu (KR); Beon, Nam-kyun, Seoul, Gwanak-gu (KR)
(74) Representative: Rooney, John-Paul

(57) **Abstract**

A data communication method between wireless devices and a system thereof are provided. A device (200) in the system sends its encryption key not using the wireless transmission method, to other device (100) to provide robust communication that is difficult to hack.

## Description

### BACKGROUND OF THE INVENTION

### 1. Field of the Invention

Methods and devices consistent with the present invention relate to data communication between wireless devices, and more particularly to a data communication method between wireless devices and a system thereof in which a device sends their authentication key.

### 2. Description of the Prior Art

Wireless data communication between a data transmission device such as a computer and a display device such as a monitor has a hacking risk, a leakage of private information, and a possibility in a violation of privacy. So encryption and decryption of data is required in the wireless data communication.

There are many algorithms of encryption and decryption such as Advanced Encryption Standard (AES), Data Encryption Standard (DES), Triple DES (TDES), Route Coloniale 4 (RC4), and Rivest Shamir Adleman (RSA). An important fact in an encryption and decryption process is an authentication key management, for it becomes possible to decrypt encrypted data if the authentication key is revealed. So it is desirable not to transmit the authentication key wirelessly. However, most solutions of present Digital Right Management (DRM) transmit the authentication key wirelessly or use a fixed authentication key. Either of these approaches increases a possibility of a hacking.

### SUMMARY OF THE INVENTION

An aspect of the present invention is to provide a robust management method of an authentic key which is prevented from hacking and transmission of data efficiently.

According to the present invention there is provided an apparatus and method as set forth in the appended claims. Other features of the invention will be apparent from the dependent claims, and the description which follows.

According to an aspect of the invention, there is provided a data communication method between wireless devices comprising generating a character key in a display device, displaying the character key, receiving the character key through a character input unit of a data transmitting device, encrypting data using the character key, and transmitting the encrypted data to the display device. The encrypting data may comprise retrieving encryption information and at least one encryption key by decoding and decompressing the character key, and encrypting the data using the retrieved encryption information and the at least one encryption key. The data communication method may comprise displaying a black image or a warning message if the encryption information and the at least one encryption key which are used to encrypt the data do not match a decryption information and at least one encryption key which the display device has until a predetermined time passes. The data communication method may comprise displaying an encrypted image if the encryption information and the at least one encryption key which are used to encrypt the data do not match a decryption information and at least one encryption key which the display device has within the predetermined time. The display device may be a monitor and the data transmitting device may be a computer.

According to an aspect of the invention, there is provided a data communication method between two wireless devices comprising generating encryption information, decryption information, and at least one encryption key in a first device, storing the at least one encryption key and at least one the encryption information and the decryption information in a portable storage medium, receiving the at least one encryption key and at least one the encryption information and the decryption information of the portable storage medium in a second device, encrypting data using the encryption information and the at least one encryption key which a device which encrypts the data among the first and the second device, has, and transmitting the encrypted data to a device which has a display unit among the first and the second device. The data communication method may comprise displaying a black image or a warning message if the encryption information and the at least one encryption key which are used to encrypt the data do not match a decryption information and at least one encryption key which the device which has a display unit, has until a predetermined time passes. The data communication method may comprise displaying an encrypted image if the encryption information and the at least one encryption key which are used to encrypt the data do not match a decryption information and at least one encryption key which the device which has a display unit, has within the predetermined time. The device which transmits the encrypted data may be a computer and the device which has a display unit may be a monitor.

According to an aspect of the invention, there is provided a data communication method between two wireless devices comprising checking whether a mode is a security mode, determining which one of a data transmitting device and a display device generates encryption information, decryption information, and at least one encryption key if the mode is the security mode, storing the decryption information and the at least one encryption key in a portable storage medium and receiving the decryption information and the at least one encryption key of the portable storage medium in the display device if the data transmitting device generates the encryption information, the decryption information, and the at least one encryption key, encrypting data using the encryption information and the at least one encryption key, and transmitting the encrypted data to the display device. The data communication method may comprise storing the encryption information and the at least one encryption key in the portable storage medium and receiving the encryption information and the at least one encryption key of the portable storage medium in the transmitting device if the display device generates the encryption information, the decryption information, and the at least one encryption key. The data communication method may comprise making a character key which is an encoded and compressed form of the encryption information and the at least one encryption key, receiving the character key through a character input unit of the data transmitting device, and decompressing and decoding the character key if the display device generates the encryption information, the decryption information, and the at least one encryption key.

According to an aspect of the invention, there is provided a data communication system comprising a display device comprising a key generating unit which generates a character key, a display unit which displays the character key, and a wireless receiving unit, and a data transmitting device comprising a character input unit which inputs the character key into the transmitting unit, a control unit which encrypts data using the character key; and a wireless transmitting unit which transmits the encrypted data to the display device. The control unit may extract encryption information and at least one encryption key by decompressing and decoding the received character key and encrypts data using the encryption information and the at least one encryption key. The display unit may display a black image or a warning message if the encryption information and the at least one encryption key which are used to encrypt the data do not match a decryption information and at least one encryption key which the display device has until a predetermined time passes. The display unit may display an encrypted image if the encryption information and the at least one encryption key which are used to encrypt the data do not match a decryption information and at least one encryption key which the display device has within the predetermined time.

According to an aspect of the invention, there is provided a data communication system comprising a data transmitting device comprising a key generating unit which generates encryption information, decryption information, and at least one of authentication keys, an output port which outputs the decryption information and the at least one encryption key to a portable storage medium, a control unit which encrypts data using the encryption information and the at least one encryption key, and a wireless transmitting unit which transmits the encrypted data to the display device, and a display device comprising an input port which receives the decryption information and at least one encryption key from the portable storage medium, a wireless receiving unit which receives the encrypted data, and a display unit. The display unit may display a black image or a warning message if the encryption information and the at least one encryption key which are used to encrypt the data do not match a decryption information and at least one encryption key which the display device has until a predetermined time passes. The display unit may display an encrypted image if the encryption information and the at least one encryption key which are used to encrypt the data don't match a decryption information and at least one encryption key which the display device has within the predetermined time.

### BRIEF DESCRIPTION OF THE DRAWINGS

The above and other aspect and features of the present invention will be apparent from the following detailed description taken in conjunction with the accompanying drawings, in which:
FIG. 1 is a brief drawing which shows a wireless data communication system according to a first exemplary embodiment of the present invention;
FIG. 2 is a brief drawing which shows a wireless data communication system according to a second exemplary embodiment of the present invention;
FIG. 3 is a block diagram of the wireless data communication system according to the second exemplary embodiment of the present invention;
FIG. 4 is a block diagram of the wireless data communication system according to a third exemplary embodiment of the present invention;
FIG. 5 is a block diagram of the wireless data communication system according to a fourth exemplary embodiment of the present invention;
FIG. 6 is a flow chart of operations in the second exemplary embodiment of the present invention;
FIG. 7 is a flow chart of operations in the third and fourth exemplary embodiments of the present invention; and
FIGS. 8A and 8B are flow charts of operations in a fifth exemplary embodiment of the present invention.

### DETAILED DESCRIPTION OF EXEMPLARY EMBODIMENTS OF THE INVENTION

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are merely specific details provided to assist those of ordinary skill in the art in a comprehensive understanding of the invention, and the present invention is only defined within the scope of the appended claims.

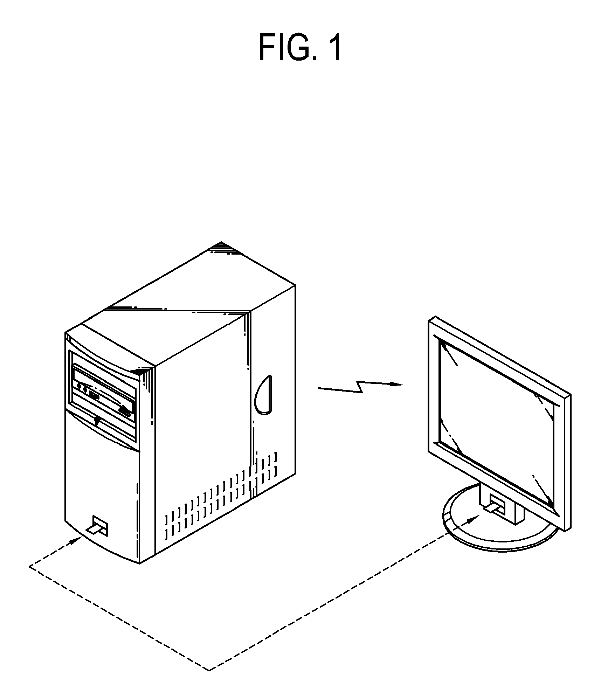

FIG. 1 is a brief drawing which shows a wireless data communication system according to a first exemplary embodiment of the present invention.

The wireless data communication system according to the first exemplary embodiment of the present invention includes a data transmitting device such as a computer and a display device such as a monitor. Each device has an input or an output port which a portable storage medium may be connected to and receives or sends encryption information, decryption information, and at least one encryption key using the portable storage medium. The encryption information is information such as type of encryption algorithm and initial vector for encryption. The decryption information is information about decryption method of encrypted data. If a device of this system has one of the encryption and decryption information, the device may recover the other information, for the decryption is a inverse process of the encryption. The encryption key is a key which may be insulted in data for making it difficult to decipher the encrypted data when the data is encrypted. The information and the keys are transmitted not by wireless transmission method to make hacking difficult.

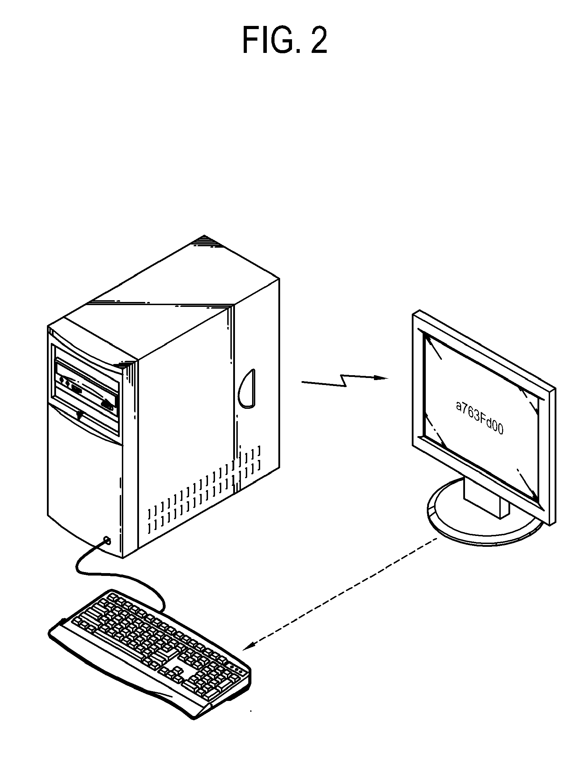

FIG. 2 is a brief drawing which shows a wireless data communication system according to a second exemplary embodiment of the present invention.

The wireless data communication system according to the second exemplary embodiment of the present invention includes a data transmitting device such as a computer and a display device such as a monitor. The display device generates a character key and displays the character key. The character key may include a combination of characters and a compressed and encoded form of encryption information and at least one encryption key, so user can read it. The data transmitting device has a character input unit. A user can input the character key by typing buttons of the character input unit. It also does not require wireless transmission of the character key, so it is hard to hack the character key.

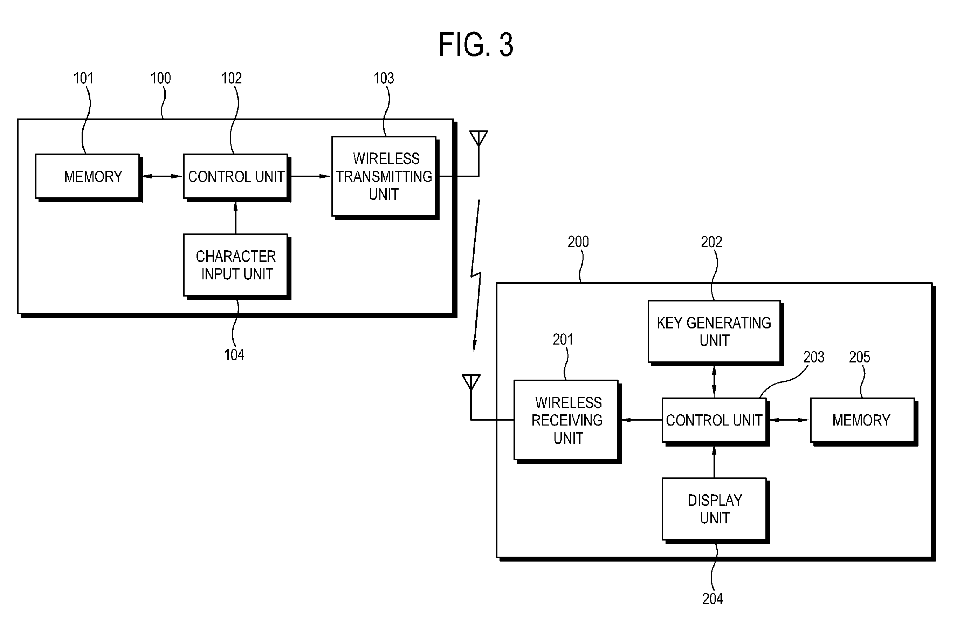

FIG. 3 is a block diagram of the wireless data communication system according to the second exemplary embodiment of the present invention.

The data transmitting device 100 comprises a memory 101, a control unit 102, a wireless transmitting unit 103, and a character input unit 104. The display device 200 comprises a wireless receiving unit 201, a key generating unit 202, a control unit 203, a display unit 204, and a memory 205

The key generating unit 202 generates a character key which includes a compressed and encoded form of encryption information and at least one encryption keys which may be 128 bits each. The compression and encoding algorithm for the character key is shared already between the data transmitting device 100 and the display device 200. The units which generate the character key or compare encryption keys which the display unit 200 has with the encryption keys which are included in a wirelessly transmitted data may be implemented in a chip. The character key generated by the key generating unit 202 is a combination of characters which may include numbers, alphabets, and special characters. The character key may be 8 bits. The control unit 203 stores the character key in the memory 205.

The display unit 204 displays the generated character key. A user can read the character key. The character input unit 104 may be a means to input characters such as a keyboard, a small keyboard, e.g., a keypad, which has fewer keys than total number of characters but has a dual key function in that it can generate all the characters, for example a keypad in a cell phone, touch screen which displays characters, and etc. If a user inputs the displayed character key using the character input unit 104, the control unit 102 may decompress and decode the inputted character key using a predetermined decompression and decoding algorithm. After decompression and decoding, encryption information and at least one encryption key which may be 128 bits each, are extracted.

The control unit 102 encrypts data using the encryption information and the at least one encryption key which is extracted from the character key. The data may include a video, image, or anything which can be displayed. After encryption, the wireless transmitting unit 103 transmits the encrypted data to the display device 200 wirelessly.

The wireless receiving unit 201 receives the wirelessly transmitted encrypted data. The control unit 203 decrypts the encrypted data using the decryption information and the at least one encryption key. If the encryption information and the at least one encryption key which are used for encryption in the data transmitting device 100 is matched to the decryption information and the at least one encryption key which the display device 200 has, then the display unit 204 displays an image which is included in the transmitted encrypted data.

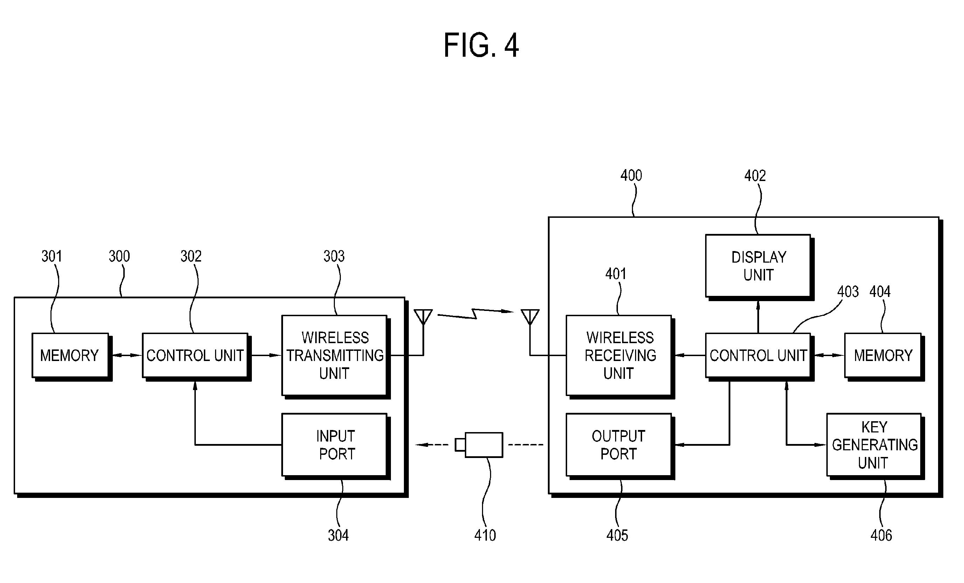

FIG. 4 is a block diagram of the wireless data communication system according to a third exemplary embodiment of the present invention.

The data transmitting device 300 comprises a memory 301, a control unit 302, a wireless transmitting unit 303, and an input port 304. The display device 400 comprises a wireless receiving unit 401, a display unit 402, a control unit 403, a memory 404, an output port 405, and a key generating unit 406.

The key generating unit 406 may generate encryption information, decryption information, and at least one encryption key. The control unit 403 may store the encryption information, decryption information and the at least one encryption key in the memory 404 and store the encryption information and the at least one encryption key in a portable storage medium 410 through the output port 405. The portable storage medium 410 is a portable medium which has a memory and a port to connect to other device for receiving and sending data such as a secure digital (SD) card and a USD flash drive.

The data transmitting device 300 receives the encryption information and the at least one encryption key from the portable storage medium 410 through the input port 304. The control unit 302 stores the encryption information and the at least one encryption key in the memory 301 and uses the encryption information and the at least one encryption key to encrypt data. The wireless transmitting unit 303 transmits the encrypted data to the display device 400 using a wireless communication method.

The display device 400 receives the transmitted encrypted data through the wireless receiving unit 401. The control unit 403 decrypts the received data using the decryption information and the at least one encryption key which are stored in the memory 404. If the encryption information and the at least one encryption key which are used for encryption in the data transmitting device 300 is matched to the decryption information and the at least one encryption key which the display device 400 has, then the display unit 402 displays an image which is included in the transmitted encrypted data.

The display device 400 also may compress and encode the encryption information and the at least one key using a predetermined compression and encoding algorithm shared between the display device 400 and the data transmitting device 300. The compressed encryption information and the at least one key may be transmitted through the portable storage medium 410 instead of encryption information and the at least one key in an uncompressed form.

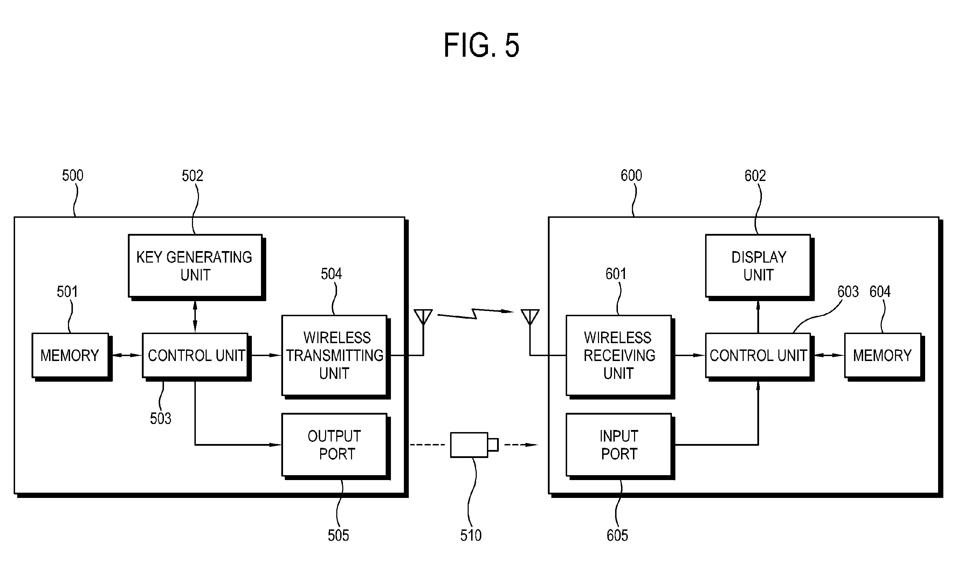

FIG. 5 is a block diagram of the wireless data communication system according to a fourth exemplary embodiment of the present invention.

The data generating device 500 comprises a memory 501, a key generating unit 502, a control unit 503, a wireless transmitting unit 504, and an output port 505. The display device 600 comprises a wireless receiving unit 601, a display unit 602, a control unit 603, a memory 604, and an input port 605.

The key generating unit 502 generates encryption information, decryption information, and at least one authentication key. The control unit 503 stores the encryption information, the decryption information and the at least one encryption key in the memory 501 and stores the decryption information and the at least one encryption key in a portable storage medium 510 through the output port 505. The portable storage medium 510 is same as the portable storage medium 410 in structure and function.

The display device 600 receives the decryption information and the at least one encryption key from the portable storage medium 510 through the input port 605. The control unit 603 stores the decryption information and the at least one encryption key in the memory 604.

The control unit 503 encrypts data using the encryption information and the at least one encryption key which are stored in the memory 501. The wireless transmitting unit 504 transmits the encrypted data using a wireless transmission method.

The display device 602 receives the encrypted data through the wireless receiving unit 601. The control unit 603 decrypts the received encrypted data using the decryption information and the at least one encryption key which is stored in the memory 604.

The data transmitting device 500 also may compress and encode the decryption information and the at least one encryption key using a predetermined compression and encoding algorithm shared between the display device 600 and the data transmitting device 500. The compressed decryption information and at least one encryption key may be transmitted through the portable storage medium 510 instead of transmitting the decryption information and the at least one key in an uncompressed form.

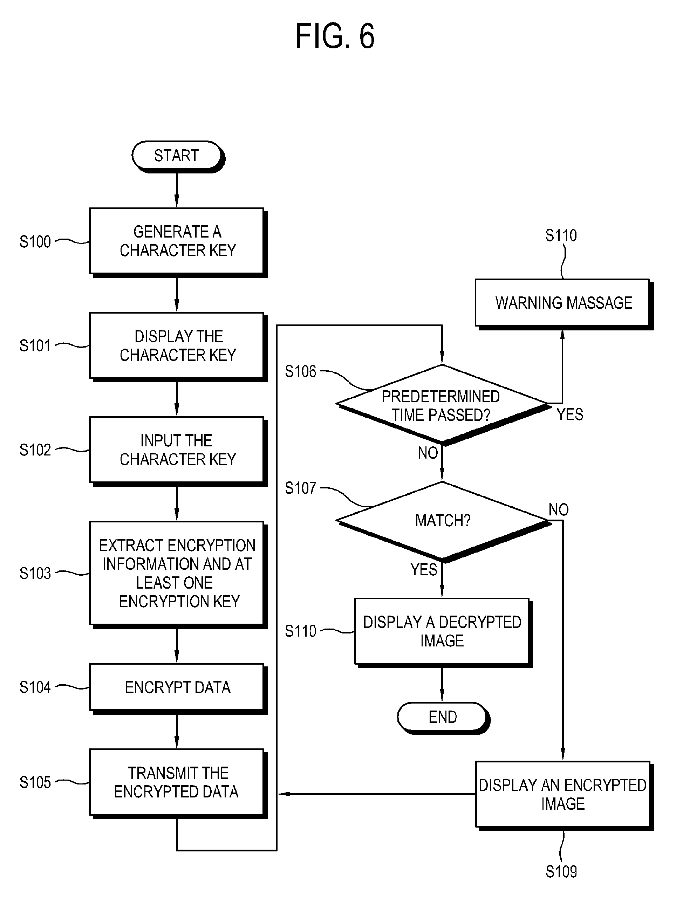

FIG. 6 is a flow chart of operations in the second exemplary embodiment of the present invention.

The key generating unit 202 generates a character key S100. The display unit 204 displays the character key S101. A user inputs the character key which is displayed in the display unit 204, using the character input unit 104 S102. The control unit 102 may decompress and decode the inputted character key using a predetermined decompression and decoding algorithm to extract encryption information and at least one encryption key which may be 128 bits each S103. The control unit 102 encrypts data using the encryption information and the at least one encryption key which is extracted from the character key S104. The wireless transmitting unit 103 transmits the encrypted data S105.

The control unit 203 checks whether a predetermined time has passed since the display device 200 received the encrypted data S106. If the predetermined time has not passed, the control unit 203 tries to decrypt the encrypted data using the decryption information and the at least one encryption key which are stored in the memory 205 S107. If the decryption information and the at least one encryption key which are stored in the memory 205 match the encryption information and the at least one encryption key which are used to encrypt the data, the display unit 204 displays a decrypted image S108. If there is no match, the display unit 204 displays a encrypted image S109. If the decryption information and the at least one encryption key which are stored in the memory 205 do not match the encryption information and the at least one encryption key which are used to encrypt the data and the predetermined time has passed, the display unit 204 displays a warning message or a black image S110.

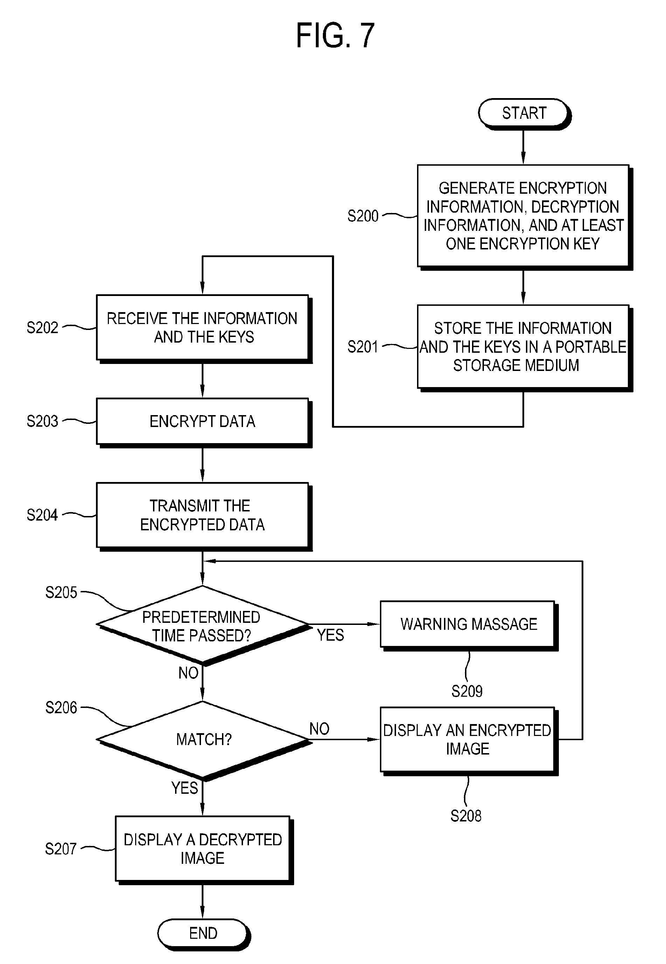

FIG. 7 is a flow chart of operations in the third and fourth exemplary embodiment of the present invention.

The key generating unit 406 or 502 generates encryption information, decryption information, and at least one encryption key S200. The control unit 403 stores the encryption information and the at least one encryption key in the portable storage medium 410 or the control unit 503 stores the decryption information and the at least one encryption key in the portable storage medium 510 S201. The data transmitting device 300 or the display device 600 receives the encryption information or the decryption information and the at least one encryption key through the input port 304 or 605 from the portable storage medium 410 or 510 S202. The control unit 302 or 503 encrypts data using the encryption information and the at least one encryption key S203. The data transmitting device 300 or 500 transmits the encrypted data through the wireless transmitting unit 303 or 504 S204.

The control unit 403 or 603 checks whether a predetermined time has passed since the display device 400 or 600 received the encrypted data S205. If the predetermined time has not passed, the control unit 403 or 603 tries to decrypt the encrypted data using the decryption information and the at least one encryption key which are stored in the memory 404 or 604 S206. If the decryption information and the at least one encryption key which are stored in the memory 404 or 604 match the encryption information and the at least one encryption key which are used to encrypt the data, the display unit 402 or 602 displays a decrypted image S207. If there is no match, the display unit 402 or 602 displays a encrypted image S208. If the decryption information and the at least one encryption key which are stored in the memory 404 or 604 do not match the encryption information and the at least one encryption key which are used to encrypt the data and the predetermined time has passed, the display unit 402 or 602 displays a warning message or a black image S209.

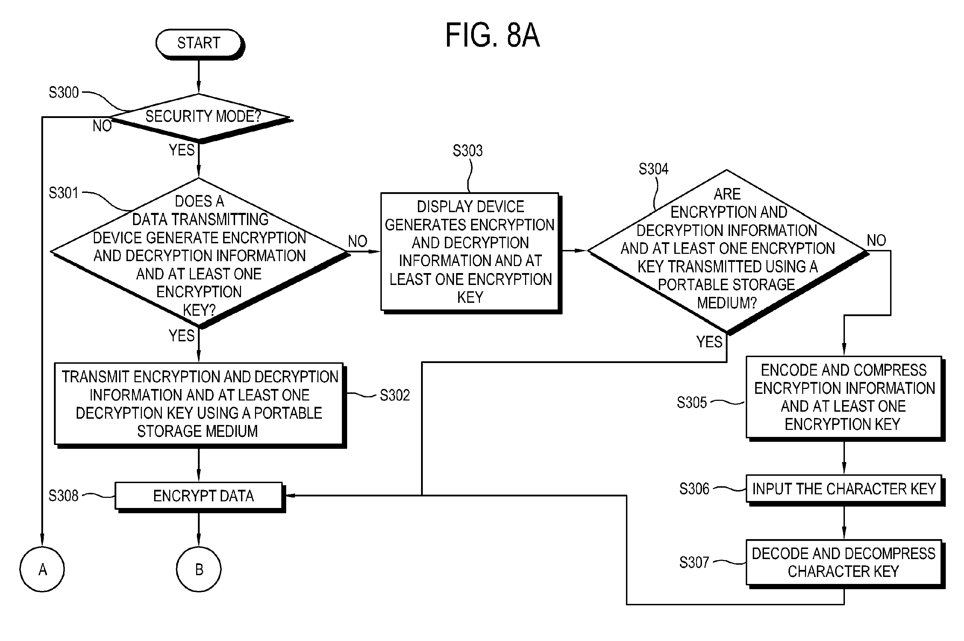

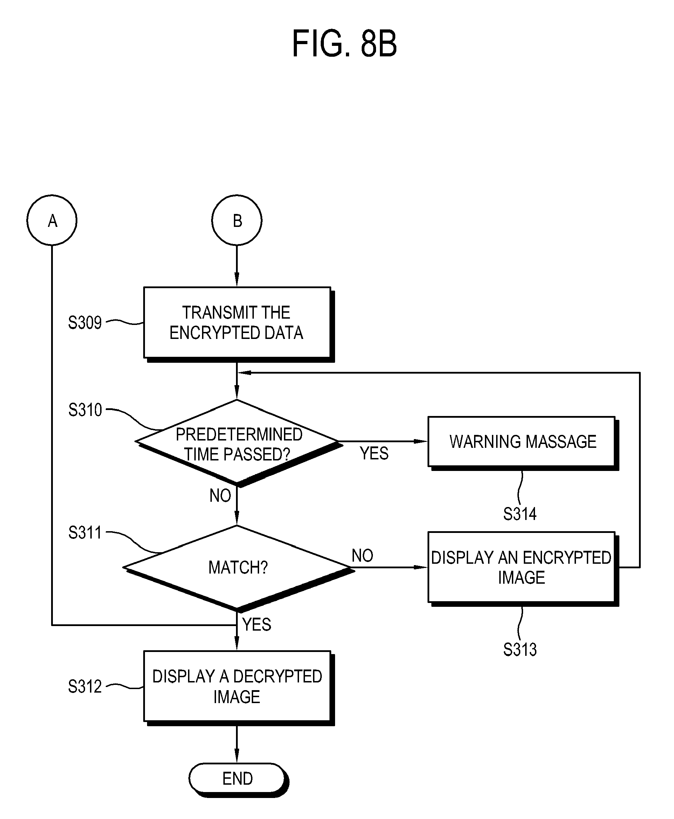

FIG. 8A and 8B are flow charts of operations in a fifth exemplary embodiment of the present invention.

A user chooses a mode of data transmission between a general mode and a security mode in which the data is transmitted in encrypted form and only an authorized device is permitted to decrypt the data S300. If the mode is the security mode, the user chooses which one between a data transmitting device and a display device to generate encryption information, decryption information, and at least one encryption key S301. If the data transmitting device is chosen, the data transmitting device generates the encryption information, the decryption information, and the at least one encryption key and transmits the encryption information, the decryption information, and the at least one encryption key using a portable storage medium S302.

If the display device is chosen, the display device generates the encryption information, the decryption information, and the at least one encryption key S303. The user chooses whether the encryption information, the decryption information, and the at least one encryption key are transmitted using a portable storage medium S304. If not transmitted, the display device encodes and compresses the encryption information and the at least one encryption key to make a character key which is a small size such as 8 bits and a combination of readable characters and displays the character key S305. The user inputs the displayed character key to the data transmitting device using a character input unit S306. The data transmitting device decodes and decompresses the character key to retrieve the encryption information and the at least one encryption key S307. If the encryption information and the at least one encryption key or the character key is transmitted using a portable storage medium or user's input, the data transmitting device encrypts data such as a video and an image, using the encryption information and the at least one encryption key S308. The wireless transmitting unit transmits the encrypted data S309.

The display device checks whether a predetermined time has passed since the display device 200 received the encrypted data S309. If the predetermined time has not passed, the display device tries to decrypt the encrypted data using the decryption information and the at least one encryption key which the display device has S310. If the decryption information and the at least one encryption key which the display device has match the encryption information and the at least one encryption key which are used to encrypt the data, the display device displays a decrypted image S311. If there is no match, the display device displays an encrypted image S313. If the decryption information and the at least one encryption key which the display device has do not match the encryption information and the at least one encryption key which are used to encrypt the data and the predetermined time has passed, the display device displays a warning message or a black image S314.

As mentioned above, the encryption information, decryption information, and at least one encryption key which are generated in one device are sent to other device not by wireless transmission method. So it is hard to hack and the system becomes robust. If the encryption information, decryption information, and at least one encryption key are sent, the receiver does not need to calculate them. So it helps in reducing the loads on a PC.

Although exemplary embodiments of the present invention have been described for illustrative purposes, those skilled in the art will appreciate that various modifications, additions and substitutions are possible, without departing from the scope and spirit of the invention as disclosed in the accompanying claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data communication method between wireless devices **characterised by**:
generating a character key in a display device (200);
displaying the character key;
receiving the character key through a character input unit (104) of a data transmitting device (100);
encrypting data using the character key; and
transmitting the encrypted data to the display device (200).

2. The data communication method of claim 1, wherein the encrypting data comprises:
retrieving encryption information and at least one encryption key by:
decoding and decompressing the character key; and
encrypting the data using the retrieved encryption information and the at least one encryption key.

3. The data communication method of claim 2, further comprising displaying a black image or a warning message if the encryption information and the at least one encryption key which are used to encrypt the data do not match a decryption information and at least one encryption key which the display device (200) has and a predetermined time has passed.

4. The data communication method of claim 2, further comprising displaying an encrypted image if the encryption information and the at least one encryption key which are used to encrypt the data do not match a decryption information and at least one encryption key which the display device (200) has, within the predetermined time.

5. The data communication method of claim 3, wherein the display device is at least one of a monitor and a television, and the data transmitting device is a computer.

6. A data communication method between two wireless devices **characterised by**:
generating encryption information, decryption information, and at least one encryption key in a first device (400,500);
storing the at least one encryption key and at least one of the encryption information and the decryption information in a portable storage medium (410,510);
receiving the at least one encryption key and the at least one of the encryption information and the decryption information of the portable storage medium (410,510), in a second device (300,600);
encrypting data using the encryption information and the at least one encryption key, by one of the first and the second devices; and
transmitting the encrypted data to another of the first and the second devices which has a display unit (402,602).

7. The data communication method of claim 6, further comprising displaying a black image or a warning message if the encryption information and the at least one encryption key which are used to encrypt the data do not match a decryption information and at least one encryption key which the another of the first and the second devices has, and a predetermined time has passed.

8. The data communication method of claim 6, further comprising displaying an encrypted image if the encryption information and the at least one encryption key which are used to encrypt the data do not match a decryption information and at least one encryption key which the another of the first and the second devices has, within the predetermined time.

9. The data communication method of claim 6, wherein the one of the first and the second devices which transmits the encrypted data is a computer and the another of the first and the second devices which has the display unit is a monitor.

10. A data communication system comprising:
a display device (200) comprising:
a key generating unit (202) which generates a character key;
a display unit (204) which displays the character key; and
a wireless receiving unit (201); and
a data transmitting device (100) comprising:
a character input unit (104) which receives an input of the character key;
a control unit (102) which encrypts data using the character key; and
a wireless transmitting unit (103) which transmits the encrypted data to the display device.

11. The data communication system of claim 10, wherein the control unit (102) extracts encryption information and at least one encryption key by decompressing and decoding the received character key and encrypts data using the encryption information and the at least one encryption key.

12. The data communication system of claim 11, wherein the display unit (204) displays a black image or a warning message if the encryption information and the at least one encryption key which are used to encrypt the data do not match a decryption information and at least one encryption key which the display device (200) has, and a predetermined time has passed.

13. The data communication system of claim 11, wherein the display unit (204) displays an encrypted image if the encryption information and the at least one encryption key which are used to encrypt the data do not match a decryption information and at least one encryption key which the display device (200) has, within the predetermined time.

14. A data communication system comprising:
a data transmitting device (500) comprising:
a key generating unit (502) which generates encryption information, decryption information, and at least one authentication key;
an output port (505) which outputs the decryption information and the at least one encryption key to a portable storage medium (510);
a control unit (503) which encrypts data using the encryption information and the at least one encryption key; and
a wireless transmitting unit (504) which transmits the encrypted data to the display device; and
a display device (600) comprising:
an input port (605) which receives the decryption information and at least one encryption key from the portable storage medium (510);
a wireless receiving unit (601) which receives the encrypted data; and
a display unit (602).

15. The data communication system of claim 14, wherein the display unit (602) displays a black image or a warning message if the encryption information and the at least one encryption key which are used to encrypt the data do not match a decryption information and at least one encryption key which the display device (600) has, and a predetermined time has passed.
